Europäisches Patentamt

European Patent Office

Office européen des brevets

(19)

(11) EP 0 822 515 B1

(12) FASCICULE DE BREVET EUROPEEN

(45) Date de publication et mention
de la délivrance du brevet:
**07.12.2005 Bulletin 2005/49**

(51) Int Cl.⁷: **G06T 5/30**

(21) Numéro de dépôt: **97202312.1**

(22) Date de dépôt: **24.07.1997**

(54) **Procédé de segmentation automatique d'une image numérique et dispositif mettant en oeuvre ce procédé**

Verfahren zur automatischen Segmentierung von numerischen Bildern und Vorrichtung zur Ausführung dieses Verfahrens

Automatic segmentation method for digital images and apparatus using such method

(84) Etats contractants désignés:
**DE FR GB**

(30) Priorité: **31.07.1996 FR 9609641**

(43) Date de publication de la demande:
**04.02.1998 Bulletin 1998/06**

(73) Titulaire: **Koninklijke Philips Electronics N.V.
5621 BA Eindhoven (NL)**

(72) Inventeur: **Makram-Ebeid, Shérif
75008 Paris (FR)**

(74) Mandataire: **Charpail, François et al
Société Civile S.P.I.D.
156, Boulevard Haussmann
75008 Paris (FR)**

(56) Documents cités:
**EP-A- 0 525 804          DE-C- 4 435 796**

• **THACKRAY B D ET AL: "SEMI-AUTOMATIC SEGMENTATION OF VASCULAR NETWORK IMAGES USING A ROTATING STRUCTURING ELEMENT (ROSE) WITH MATHEMATICAL MORPHOLOGY AND DUAL FEATURE THRESHOLDING" IEEE TRANSACTIONS ON MEDICAL IMAGING, vol. 12, no. 3, 1 septembre 1993, pages 385-392, XP000412315**
• **CHIEN-CHUAN KO ET AL.: "A fully automated identification of coronary borders from the tree structure of coronary angiograms" INTERNATIONAL JOURNAL OF BIO-MEDICAL COMPUTING, vol. 39, no. 2, mai 1995, IRELAND, pages 193-208, XP000525807**
• **MERCHANT F A ET AL: "SEMI-AUTOMATIC MORPHOLOGICAL MEASUREMENTS OF 2-D AND 3-D MICROVASCULAR IMAGES" PROCEEDINGS OF THE INTERNATIONAL CONFERENCE ON IMAGE PROCESSING (IC, AUSTIN, NOV. 13 - 16, 1994, vol. 1 OF 3, 13 novembre 1994, INSTITUTE OF ELECTRICAL AND ELECTRONICS ENGINEERS, pages 416-420, XP000521996**

**Description**

L'invention concerne un procédé de traitement d'une image numérique représentant des objets en forme de rubans d'intensité non-uniforme contrastant sur un fond d'intensité plus faible, ce procédé incluant une étape de segmentation automatique.

L'invention concerne aussi un dispositif pour système médical, mettant en oeuvre ce procédé.

L'invention trouve particulièrement son application dans l'industrie de systèmes d'imagerie médicale tels que les systèmes de formation d'images de rayons X artérielles. L'invention trouve une application particulière dans les systèmes d'imagerie de la vascularité du cerveau.

Un procédé de traitement d'image pour la segmentation du système vasculaire d'une souris est déjà connu de la publication intitulée "Semi-Automatic Segmentation of Vascular Network Images Using a Rotating Structuring Element (ROSE) with Mathematical Morphology and Dual Feature Thresholding" par Brett D. Thackray et Alan C. Nelson, dans IEEE Transactions on Medical Imaging, Vol. 12, No. 3, September 1993. Cette publication décrit une méthode d'utilisation d'une batterie de filtres linéaires, dont les supports ont une longueur substantiellement constante et huit orientations différentes, passés sur une image de système vasculaire, dans une opération d'ouverture morphologique, pour détecter les gros vaisseaux ayant des orientations similaires. Les gros vaisseaux détectés sont éliminés de l'image par une étape de seuillage et l'image comportant les petits vaisseaux restants est étudiée pour déterminer leur concentration. Le passage de la batterie de filtre est une opération automatique qui permet la détection des gros vaisseaux. La détection de tous les vaisseaux comprend en fait trois étapes principales, d'où le nom de méthode semi-automatique. La dernière étape concernant l'étude des petits vaisseaux ne comprend pas de détection de leur orientation, ni celle de leurs diamètres ni celle de leurs intensités. La première étape de détection des gros vaisseaux ne comprend pas la détection de leurs diamètres ni celle de leurs intensités.

Un procédé de traitement d'image pour la segmentation d'un artériogramme coronaire, et pour la détermination automatique du squelette et des bords des artères dans cet artériogramme est déjà connu de la publication intitulée "A fully automated identification of coronary borders from the tree structure of coronary angiograms "par Chien-Chuan KO, Chi-Wu MAO, Yung-Nien SUN, et Shei-Hsi CHANG, dans international Journal of Bio-Médical Computing 39 (1995) pp. 193-208, édité par ELSEVIER.

Ce procédé comprend L'acquisition d'une image numérique angiographique et la segmentation de cette image pour séparer les informations appartenant aux objets formés par les artères du reste de l'image appelé fond. L'étape de segmentation comprend une séquence d'opérations morphologiques. Cette séquence inclut d'abord le passage d'un filtre médian sur l'image originale pour éliminer le bruit en préservant le bord des objets. Des filtres morphologiques sont ensuite passés sur l'image lissée.

Pour le traitement de l'image, les artères sont représentées en clair sur fond sombre. Un filtre morphologique est d'abord passé sur ladite image lissée pour identifier les parties du fond ayant des variations d'intensité lentes. Ce filtre opère une fermeture morphologique en utilisant un élément structurant morphologique hexagonal plat ayant un diamètre de 25 pixels. Par élément structurant morphologique plat, on entend que les données d'intensité à l'intérieur des limites du filtre sont constantes. Le diamètre de 25 pixels est plus grand que le diamètre des artères dans l'image d'origine. Par cette opération, les artères plus étroites que l'hexagone sont éliminées de l'image lissée. L'image résultante est alors soustraite de l'image lissée pour produire une image nouvelle qui retient les informations des bords des objets. Cette fermeture morphologique constitue une opération d'extraction du fond. A cet effet, elle inclut une dilatation suivie d'une érosion.

Cette opération d'extraction du fond par fermeture morphologique est suivie d'une normalisation linéaire d'intensité pour rehausser le contraste, puis d'un seuillage pour produire une image binaire.

La segmentation proprement dite de l'image en objets et fond est alors entreprise sur ladite image binaire. Elle comprend une opération de fermeture binaire pour lisser les contours de l'artère coronaire, et pour raccorder les segments de vaisseaux coupés lors du traitement d'extraction du fond. Elle comprend ensuite une opération d'ouverture binaire, réalisée sur l'image précédente, pour éliminer les objets étrangers au système artériel. Dans ces deux opérations de fermeture puis d'ouverture morphologiques, les éléments structurants utilisés sont plats. Les opérations s'appuient sur les contours. Dans toutes les opérations morphologiques réalisées, les algorithmes sont itératifs et gourmands en temps de calcul. La segmentation de l'image selon le procédé connu du document cité est terminée à ce stade.

Le procédé connu s'applique plus particulièrement à une image d'origine contrastée, où les artères se distinguent nettement, où il y a relativement peu de recouvrement de vaisseaux, le système artériel étant plutôt en forme d'arbre, et où des anomalies telles que des sténoses sont plutôt recherchées.

L'objet de la présente invention est un procédé de segmentation automatique d'une image numérique représentant plus spécifiquement un système artériel d'une partie du cerveau.

Le traitement d'une telle image pose de sérieux et nouveaux problèmes. En effet, un artériogramme du cerveau est beaucoup moins contrasté qu'un angiogramme; le réseau artériel du cerveau n'est pas en forme d'arbre mais est très touffu avec de nombreux croisements de vaisseaux dus à des superpositions; les vaisseaux montrent, dans une même zone, des diamètres très différents avec des contrastes très divers dus au fait que le médicament injecté au patient, pour rendre les vaisseaux plus opaques lors de la prise de vue, est plus ou moins bien diffusé dans ce système artériel touffu.

Ces problèmes sont résolus par un procédé de traitement d'une image numérique représentant des objets en forme de rubans d'intensité non-uniforme contrastant sur un fond selon la revendication 1.

Un avantage est que ce procédé segmente l'image en tronçons de vaisseaux ayant individuellement une orientation donnée. La donnée d'orientation qui est ainsi déterminée est indépendante des données relatives à d'autres tronçons proches ou sécants, dès lors que ces autres tronçons ont des orientations différentes. Ce procédé est donc particulièrement approprié à la segmentation d'artériogrammes cérébraux.

Un autre avantage est que ce procédé est particulièrement peu gourmand en temps de calcul, c'est-à-dire dans l'état actuel de la technique, que ce procédé peut être mené à bien environ 70 fois plus rapidement que le procédé connu.

Un dispositif pour système médical, pour le traitement d'images médicales numériques, mettant en oeuvre ce procédé, fournit alors de très bons résultats, avec un temps de calcul très court.

L'invention est décrite ci-après en référence avec des figures schématiques annexées. Parmi les figures :

les FIGs.1A et 1B sont des images d'intensité, dont respectivement une image d'origine et l'image correspondante segmentée ;
les FIGS.2A à 2C montrent respectivement les étapes d'extraction du fond à différentes échelles et selon différentes orientations ;
la FIG.3 est une vue en perspective représentant une partie d'image d'intensité en relief, à deux dimensions spatiales et une dimension d'intensité ;
les FIGs.4A et 4B sont des vues en perspective montrant respectivement un élément structurant isotrope et un élément structurant anisotrope orienté ;
la FIG.5A est une vue plane, dans un plan parallèle au plan de l'image montrant les supports des éléments structurants isotropes et anisotropes orientés; et la FIG.5B montre l'appariement de vaisseaux avec des éléments structurants orientés au mieux vis-à-vis de la direction desdits vaisseaux, et à la meilleure échelle ;
les FIG.6A a 6C illustrent les opérations d'ouverture morphologique ;
la FIG.7A représente une image d'intensité d'origine montrant un artériogramme cérébral; et les FIG. 7B, 7C, 7D sont respectivement des images d'ouvertures morphologiques à l'aide d'éléments structurants isotrope, anisotrope d'orientation $\pi/2$ et

anisotrope d'orientation $\pi/4$ ;
la FIG.8 représente une image appelée image d'orientation obtenue par filtrage par les éléments structurants isotropes et anisotropes orientés, où les tronçons de vaisseaux sont représentés soit par des stries d'orientations spécifiques, soit par des points;
la FIG.9 illustre le procédé de segmentation sous forme de blocs fonctionnels ;
la FIG.10 illustre un dispositif pour mettre en oeuvre le procédé.

## PROCÉDÉ

Les figures sont décrites ci-après en détail en relation avec les différentes étapes d'un procédé de filtrage d'une image numérique, comprenant la représentation d'objets en forme de rubans contrastant substantiellement sur un fond, ces étapes effectuant une segmentation automatique de l'image pour étiqueter les pixels en pixels appartenant au fond et pixels appartenant aux objets, et pour finalement construire une image binaire ou les objets ont un niveau 1 et le fond un niveau 0.

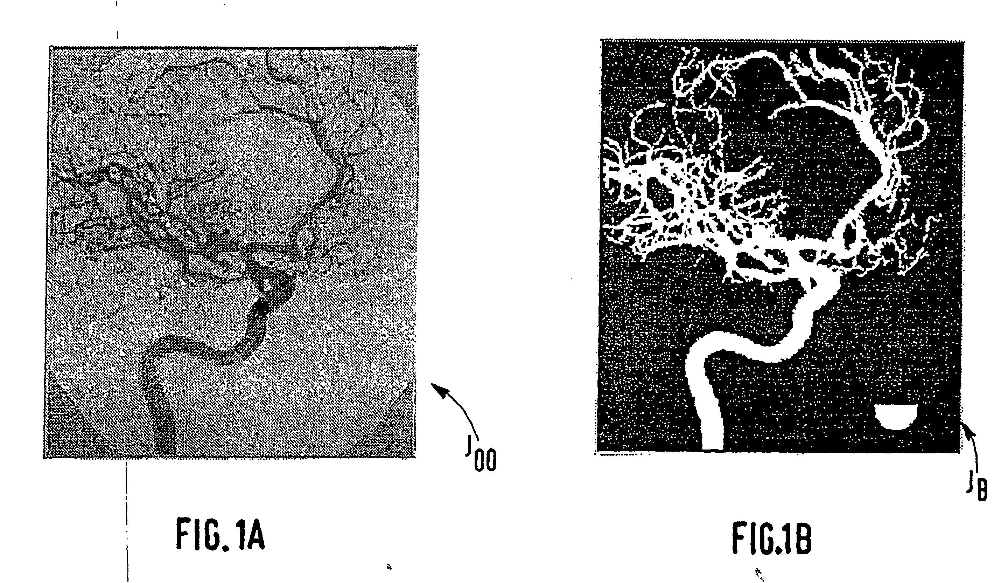

Telle que représentée sur la FIG.1A dans l'application envisagée à titre d'exemple, l'image numérique d'intensité d'origine est un artériogramme du cerveau. Dans cet artériogramme, les vaisseaux forment un enchevêtrement de rubans sombres de forme allongée difficile à examiner, aussi bien pour le diagnostic que pour la thérapie. L'image est peu contrastée. Les vaisseaux sont difficiles à discerner et présentent de nombreux croisements.

Telle que représentée sur la FIG.1B, après le déroulement du procédé de segmentation, l'image est devenue binaire, et comprend exclusivement le système artériel de l'artériogramme de la FIG.1A représente avec un niveau d'intensité constant, contrastant sur un fond uniforme.

Le présent procédé permet de construire l'image de la FIG.1B à partir de l'image de la FIG.1A, sans perte d'informations. Ainsi la précision du diagnostic médical ou de la thérapie du praticien travaillant sur l'image de la FIG.1B est considérablement améliorée par rapport à ce qui serait possible en travaillant sur l'image d'origine.

En référence avec la FIG.9 qui illustre le procédé sous forme de blocs fonctionnels, le procédé de segmentation comprend de préférence la suite d'étapes décrites ci-après :

## 1/ Acquisition d'une image numérique

Telle que représentée sur la FIG.1A, l'image numérique est acquise par des moyens 100 de formation d'images numériques, sous la forme dune matrice bidimensionnelle Joo de pixels ayant des niveaux d'intensité numérisés. L'image acquise Joo représente un artériogramme cérébral ou les artères forment des rubans sombres sur fond plus clair. Cette image est d'abord soumise à un filtrage 101 pour éliminer le bruit, par exemple par un lissage passe-bas.

Puis les intensités sont inversées par toute méthode connue de L'homme du métier pour fournir une image numérique Jo1 ou les objets à détecter sont clairs sur fond sombre. On se trouve alors avec une image du même type que l'image traitées par le procédé connu de état de la technique.

Dans la suite du procédé, on travaille sur ces images où les vaisseaux sont des rubans clairs sur fond plus sombre.

## 2/ Extraction du fond

Une extraction 110 du fond est réalisée sur l'image lissée Jo1 pour éliminer grossièrement les éléments étrangers au système artériel.

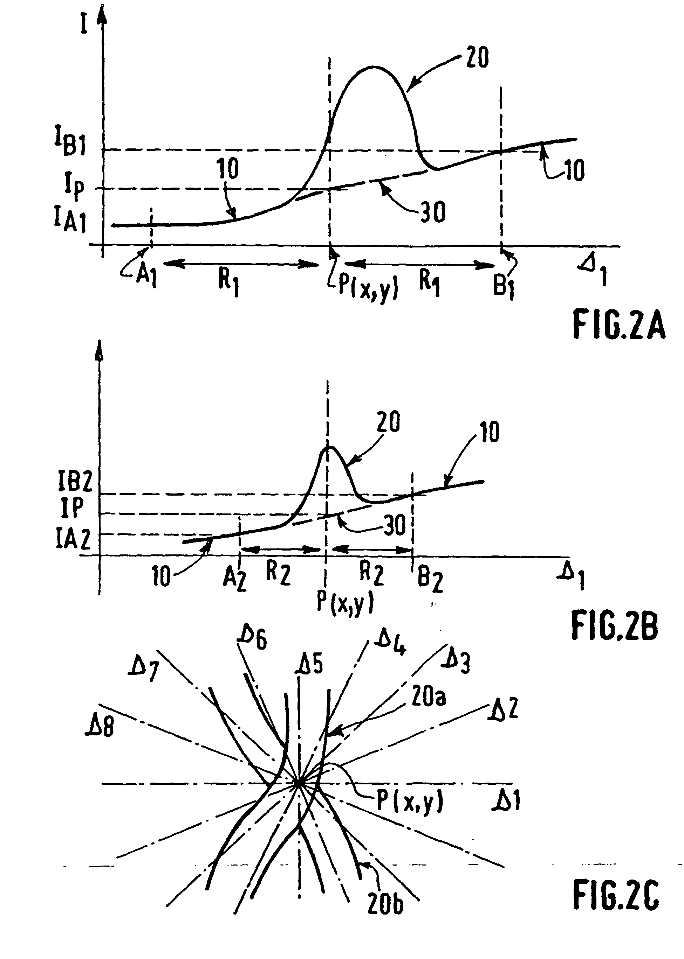

La FIG.2A représente un profil d'intensité le long dune ligne $\Delta 1$ de pixels qui intersecte un vaisseau 20 dans une image Jo1. Ce profil d'intensité montre une partie 1O à variations d'intensité lentes correspondant au fond, et une partie 20 formant un dôme d'intensité correspondant au vaisseau.

En référence à la FIG.2A, l'extraction du fond comprend un passage d'un filtre 102 centré sur un pixel courant P(x,y) de la ligne $\Delta 1$ qui effectue une moyenne entre une intensité $I_{A1}$ d'un point A1 situé a une distance donnée R1 à gauche du pixel courant P(x,y) et une intensité $I_{B1}$ d'un point B1 situé a la même distance RI a droite du pixel courant P(x,y) sur la ligne $\Delta 1$. L'intensité moyenne Ip calculée est attribuée au pixel courant P(x,y).

De par le passage de ce filtre 102, le dôme d'intensité 20 dû au vaisseau est éliminé, et une partie 30 de fond est estimée à son emplacement.

Cette opération de filtrage 102 est effectuée à une première échelle avec une première distance R1 de telle manière que la valeur 2RI est supérieure aux dimensions transversales des plus grands vaisseaux. En référence avec la FIG.2B, cette opération de filtrage 102 peut en outre être effectuée à une seconde échelle avec une valeur de distance R2 différente, choisie en fonction de diamètres de vaisseaux plus petits.

En référence avec la FIG.2C qui représente schématiquement vu du dessus des vaisseaux 20a et 20b dans l'image lissée J1, cette opération de filtrage 102 est effectuée non seulement à une ou plusieurs échelles comme selon les FIG.2A et 2B, mais aussi selon une pluralité M de directions $\Delta I$ à $\Delta M$ régulièrement reparties dans le plan de l'image $J_{01}$, de n/M en n/M. De préférence M = 8. On effectue donc ce filtrage 102 selon 8 directions espacées angulairement régulièrement de $\pi/8$ en $\pi/8$.

En chaque point courant P(x,y), la valeur d'intensité du fond est ensuite estimée comme la valeur la plus faible de toutes les valeurs estimées en faisant varier l'échelle et l'orientation $\Delta$. Par cette opération 102, une image estimée du fond $J_{BG}$ est obtenue.

Puis une image Jo est formée en attribuant aux pixels les données d'intensité calculées en soustrayant, par une opération 103, les valeurs d'intensité estimées pour le fond et prélevées dans L'image $J_{BG}$ des données d'intensité de L'image lissée $J_{01}$.

Ce procédé d'extraction du fond est très précis parce qu'il estime et extrait le fond aussi à l'emplacement des vaisseaux. Ce procédé d'extraction du fond est très avantageux, parce qu'il n'est pas gourmand en temps de calcul, et parce qu'il ne produit pas de défauts, d'erreurs ou d'imprécision dans les régions de croisement ou superposition de vaisseaux. L'image $J_0$ est maintenant l'image de travail; l'image $J_0$ montre des vaisseaux clairs sur fond sombre.

## 3/ Étape de segmentation appelée segmentation floue.

Une première étape de segmentation 130, appelée segmentation floue (fuzzy) est effectuée sur l'image Jo résultant de l'extraction du fond. On adopte la dénomination segmentation floue pour distinguer cette segmentation d'autres méthodes de segmentation connues de l'état de la technique.

Pour mener a bien cette étape de segmentation, on considère que l'image Jo à traiter n'est pas une image binaire, mais que les vaisseaux en forme de ruban ont des intensités variables, contrastant sur le fond d'intensité plus faible, qui a été rendu substantiellement uniforme.

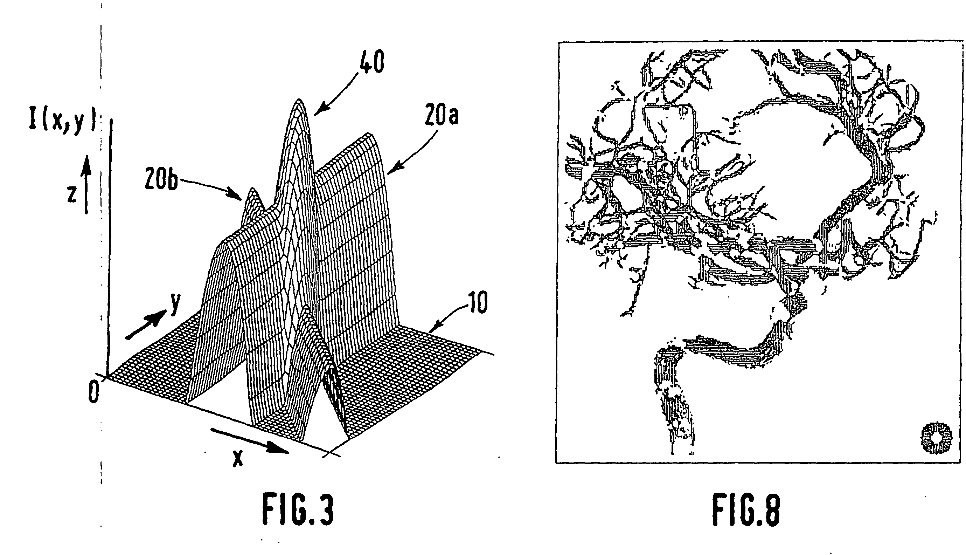

En référence à la FIG.3, selon ce procédé, l'image Jo à segmenter est envisagée comme un paysage fictif en trois dimensions, c'est-à-dire à deux dimensions spatiale (x,y) correspondant aux axes de la matrice bidimensionnelle de pixels, avec une troisième dimension z sur laquelle sont reportées des valeurs d'intensité I(x,y) variables en fonction des deux dimensions spatiales. Dans ce paysage fictif, des artères, par exemple référencées 20a, 20b, forment selon leur valeur d'intensité vis-à-vis du fond, des tunnels plus ou moins élevés, c'est-à-dire des objets ayant des structures de forme allongée et arrondies à leur partie supérieure en relief sur le fond 10 substantiellement plat. Sur la FIG.3, deux artères 20a, 20b se croisent, c'est-à-dire sont, dans la réalité, superposées. Sur l'image d'intensité Jo, l'intensité au croisement est égale à la somme des intensités des deux artères. Ce fait est représenté par le dôme d'intensité 40 sur la FIG.3.

Cette étape de segmentation appelée floue 130 comprend une opération d'ouverture morphologique menée a bien avec un, ou plusieurs élément(s) structurant(s) tridimensionnels. Par tridimensionnel, on entend que l'élément structurant a un support bidimensionnel spatialement dans un plan u,v parallèle au plan x,y de l'image, et a une fonction d'intensité G non binaire, c'est-à-dire présente une fonction d'intensité G(u,v) variable en troisième dimension z, en fonction des deux dimensions spatiales.

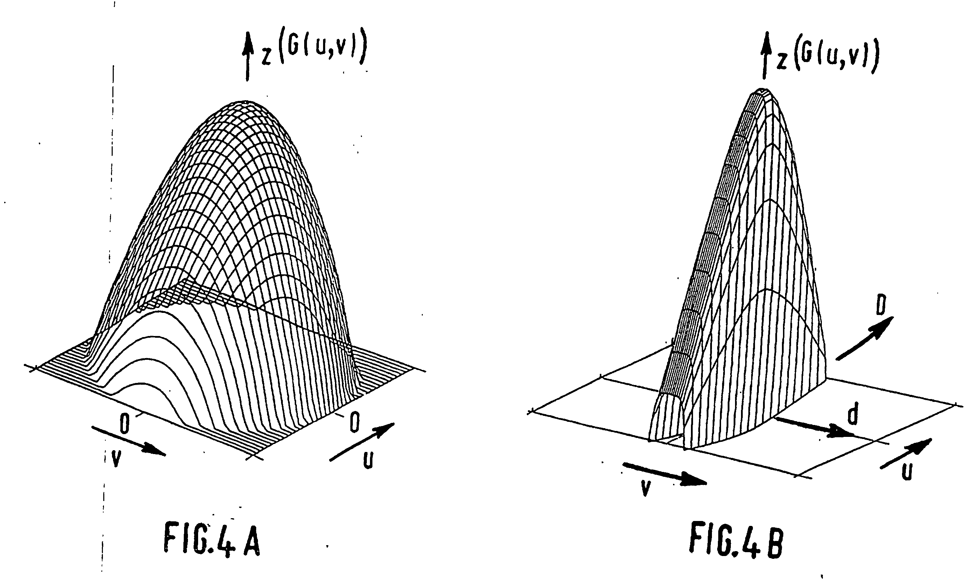

En référence avec la FIG.4A, par exemple, le support de l'élément structurant peut être circulaire. Alors l'élément structurant est isotrope. La fonction d'intensité G(u,v) est de révolution autour d'un axe z de symétrie passant au centre du cercle, et servant d'axe de coordonnées pour les intensités.

En référence avec la FIG.4B, le support peut être oblong, ayant un petit axe principal d'orientation d et un grand axe principal d'orientation D. L'élément structurant est alors anisotrope. De préférence l'opération d'ouverture morphologique est menée à bien au moyen de plusieurs éléments structurants.

En référence avec la FIG.5A, on construit un banc d'éléments structurants comprenant une pluralité N d'éléments structurants anisotropes, ayant des grands axes principaux d'orientation DI à DN régulièrement angulairement espacés dans le plan (u,v) parallèle au plan x,y de l'image, de $\pi/N$ en $\pi/N$. Sur la FIG.5A, sont représentés les supports de 8 éléments structurants $G_1$ à $G_8$, dont les grands axes principaux de directions D1 a D8 ont pour centres 01 à 08 et sont régulièrement angulairement espacés de $\pi/8$ en $\pi/8$.

En référence avec la FIG.5A, ce banc d'éléments structurants inclut un élément isotrope G9 dont le support admet un centre de symétrie O9.

En référence a la FIG.3 qui représente une partie d'image Jo en trois dimensions, et avec les FIG. 4A, 4B qui représentent des exemples d'éléments structurants en trois dimensions, par l'opération d'ouverture morphologique, on cherche à déterminer quel élément structurant du banc d'éléments structurants anisotropes orientés, ou isotrope, s'insère au mieux dans un tronçon de vaisseau donné, de manière à déterminer la position, l'étendue, l'intensité et l'orientation de ce tronçon de vaisseau.

A cet effet, on construit un premier banc d'éléments structurants G1 à G8, comme décrit précédemment en référence avec la FIG.5A, à une première échelle, pour détecter les vaisseaux de grand diamètre ayant des tronçons de grande longueur dans une même direction, et on construit un ou plusieurs autre(s) banc (s) d'éléments structurants à une ou des échelle(s) plus petite(s) pour détecter des plus petits vaisseaux.

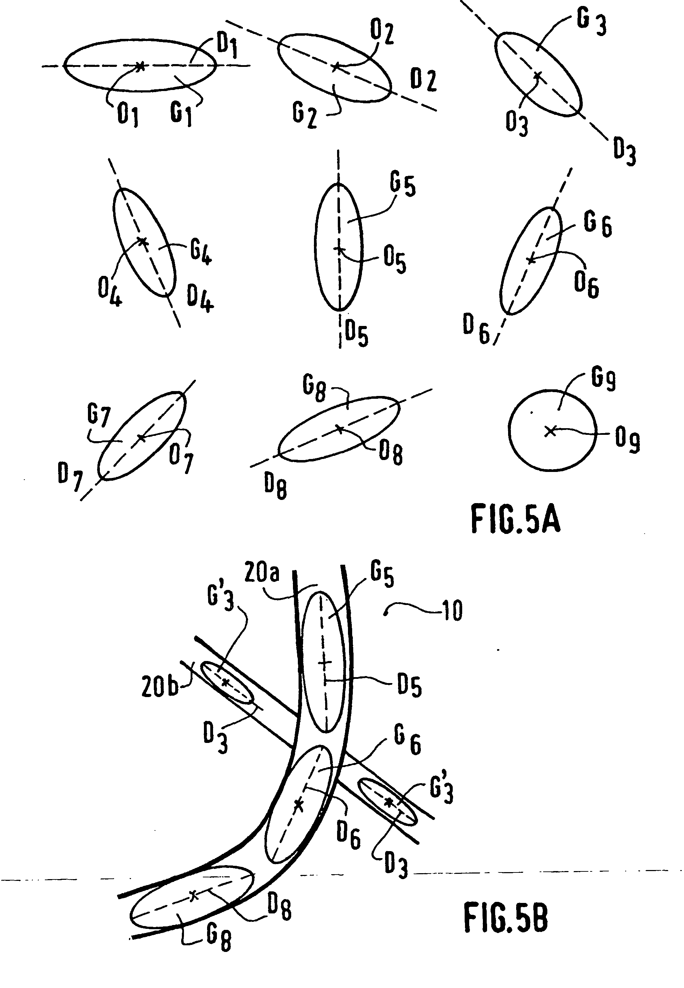

En référence avec la FIG.5B par exemple, des éléments structurants de type G8, puis de type G6, puis de type G5 s'insèrent dans le vaisseau 20a, permettant de déterminer l'étendue, la direction et l'intensité de trois tronçons de ce vaisseau 20a. Des éléments structurants $G'_3$ à une plus petite échelle s'insèrent par ailleurs dans le tronçon de vaisseau 20b, permettant d'en déterminer l'étendue, la direction et l'intensité.

L'avantage de ce procédé est que des vaisseaux qui se croisent, tels que 20a et 20b, peuvent être segmentés individuellement, donc sans commettre d'erreur au croisement.

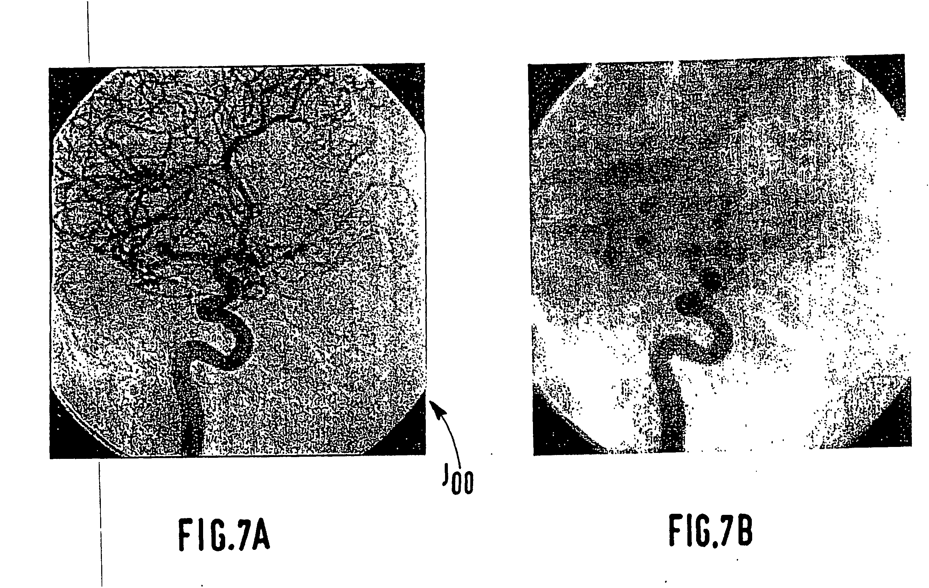

Ainsi, une première opération d'ouverture morphologique peut être menée a bien au moyen de l'élément structurant isotrope du type montre sur la FIG.5A. Cette opération est effectuée en passant ledit élément structurant isotrope sur des points d'une image Jo correspondant à une image d'origine Joo, telle que par exemple représentée sur la FIG.7A, le long de lignes et de colonnes, pour fournir une image d'ouverture telle que par exemple représentée sur le FIG.7B ou les objets circulaires, ou bien les vaisseaux ayant des dimensions transversales telles que l'élément structurant peut y être inséré, sont détectés.

On notera que les images des FIG.7A à 7D ont des intensités inversées par rapport à l'image de travail actuelle Jo. Dans ce procédé de traitement d'image, une telle inversion est purement symbolique, et faite ici pour présenter des images plus compréhensibles.

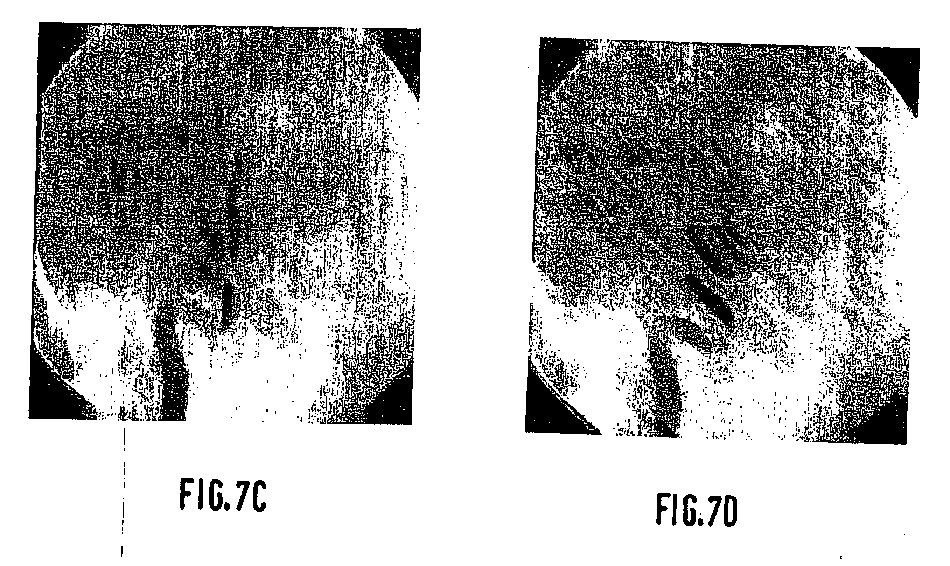

Puis une pluralité d'opérations d'ouverture morphologique peuvent être menées à bien respectivement au moyen des éléments du lot de N éléments structurants anisotropes orientés. Ces opérations sont effectuées en passant lesdits éléments structurants anisotropes sur des points de L'image Jo, le long de ligne de points parallèles aux grands axes principaux, pour fournir un lot de N images d'ouvertures dans lesquelles sont détectés respectivement des tronçons de vaisseaux ayant même orientation que lesdits axes principaux. Ainsi, la FIG.7C montre une image d'ouverture réalisée en passant un élément structurant d'orientation $\pi/2$, et la FIG.7D un élément structurant d'orientation $\pi/4$.

D'une manière générale, les fonctions d'intensité des éléments structurants sont des fonctions monomiales, d'ordre supérieur à 1 ou des fonctions quadratiques telle que, par exemple : $G(u) = a.u^n$ où u est la variable selon un axe de traitement de l'image, par exemple, le grand axe d'un élément structurant anisotrope, où a est une constante, et où n est une constante supérieure à 1. Le réglage des valeurs de ces constantes permet de déterminer l'échelle de l'élément structurant.

En référence à la FIG.9, l'opération de segmentation floue 130 comprend d'abord une première sous-étape d'érosion 111. En référence avec la FIG.6A, l'érosion est menée à bien sur un profil d'intensité I(x) de l'image Jo, dans un plan défini par un axe des abscisses x parallèle à une direction d'un axe principal D, ou occasionnellement d, ou du rayon d'un élément structurant G donne; ce plan est défini également par un axe de coordonnées z où sont portées les valeurs d'intensité. L'érosion est menée à bien au moyen de la fonction d'intensité G(u) de l'élément structurant qui présente un maximum dans ce plan. L'érosion est effectuée en chaque point d'abscisse $x_o$ du profil d'intensité I(x) par des glissements successifs de la fonction d'intensité G(u) au-dessous du profil d'intensité I(x) avec un point de tangence T; la détermination du lieu géométrique du maximum de la fonction G(u), lors de ce glissement, détermine la forme érodée $I_E(x)$ du profil d'intensité I(x) représenté en trait pointillé sur la FIG.6A.

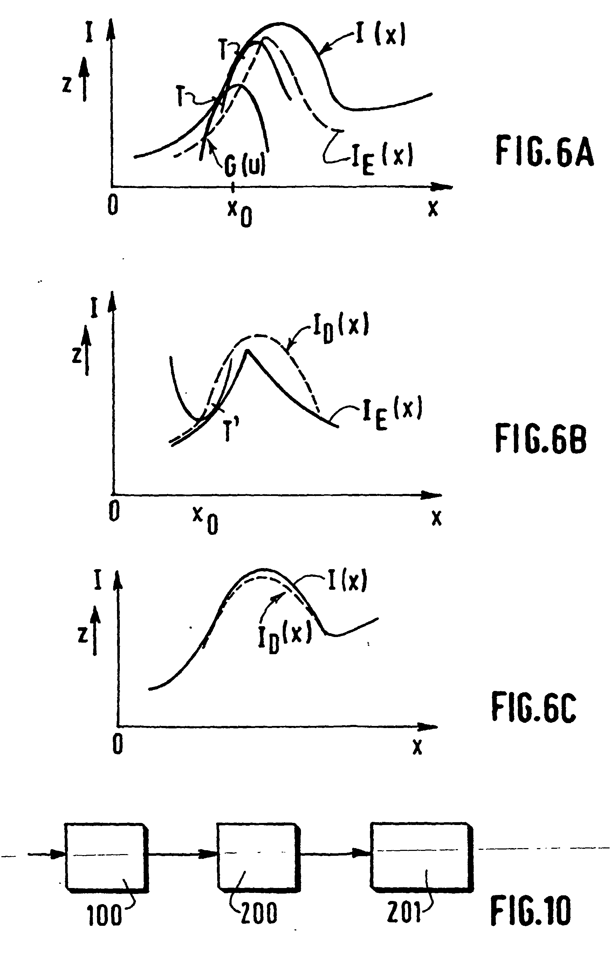

En référence à la FIG.9, l'opération de segmentation floue 130, comprend une seconde sous-étape de dilatation 112 pratiquée sur le profil érodé $I_E(x)$, au moyen de la fonction d'intensité inversée -G(u) de l'élément structurant présentant un minimum d'intensité dans le plan x,z. La dilatation est effectuée en chaque point d'abscisse $x_o$ du profil érodé ($I_E(x)$) par des glissements successifs de la fonction d'intensité inversée -G(u) au-dessus dudit profil érodé, avec un point de tangence T. La détermination du lieu géométrique du minimum de la fonction -G(u), lors de ce glissement, détermine la forme dilatée $I_D(x)$ du profil d'intensité érodé, représenté en pointillé sur la FIG.6B.

En référence avec la FIG.6C, l'opération d'érosion-dilatation permet de déterminer parmi les éléments du banc, l'élément structurant qui s'insère au mieux dans les tronçons de vaisseaux. Le passage des éléments anisotropes parallèlement à leur grand axe principal permet de déterminer les tronçons de vaisseaux ayant une longueur significative orientée selon ce grand axe, alors que le passage de l'élément isotrope détermine les dimensions transversales des vaisseaux.

Le passage de l'élément isotrope permet aussi une détection très importante d'anomalies que sont les anévrismes lies aux vaisseaux, car ces anomalies ont une forme arrondie formant une hernie sur un vaisseau. De telles anomalies ne pourraient pas être détectées autrement que par L'association des éléments structurants anisotropes orientés et de l'élément isotrope. Ces anomalies sont immanquablement détectées avec le ou les banc(s) d'éléments structurants propose(s) a une ou plusieurs échelle(s).

En référence à la FIG.9, par les N opérations d'ouvertures 121 à 129, on forme ainsi N images d'ouverture. Ainsi, avec neuf éléments structurants, on forme neuf images d'ouverture $J_1$ à $J_9$ par exemple. En référence à la FIG.9, une nouvelle image est formée en 113 à partir des images d'ouverture. Dans cette nouvelle image, chaque pixel est affecté de l'intensité maximale, parmi les intensités calculées par les N éléments structurants. Cette image est appelée image des intensités maximales $J_{MAx}$.

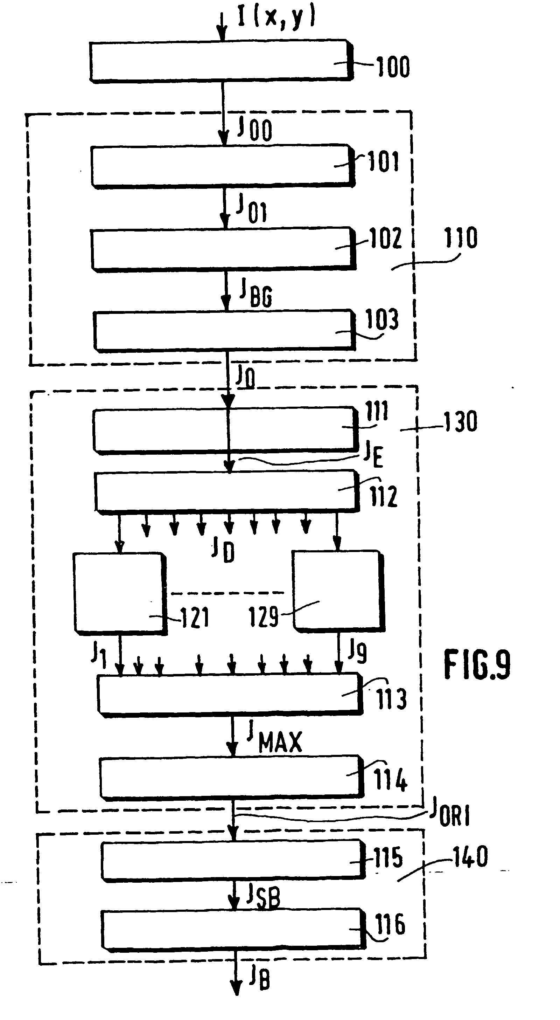

Les informations des différentes images d'ouvertures peuvent aussi être regroupées par une opération 114 dans une image supplémentaire appelée image d'orientation $J_{OR1}$ telle que représentée sur la FIG.8, qui est une image segmentée en 9 classes d'orientation correspondant aux tronçons de vaisseaux détectés par les 9 éléments structurants de la FIG.5A ayant donné la plus grande intensité. Les différents tronçons segmentés sont représentés avec des stries parallèles aux grands axes des éléments structurants anisotropes correspondants, ou avec des points dans le cas des parties détectées par l'élément structurant isotrope.

## 4/ Étape de segmentation binaire

Ensuite, pour la première fois dans le procédé, une image binaire $J_{sB}$ est formée par un seuillage 115. A l'issue de ce seuillage, selon une méthode connue de état de la technique, on divise l'image en domaines connectés. Deux pixels sont appelés connectés si la distance, mesurée en nombre de pixels, qui sépare ces deux pixels est inférieure a une distance prédéterminée.

On définit ainsi des domaines ayant une surface minimale, et appelés domaines connectés contenant des pixels connectés. Dans une opération 116, les pixels n'appartenant pas à des domaines connectés ainsi définis sont éliminés.

Une image binaire segmentée $J_B$ telle que celle de la FIG.1B est alors obtenue. On notera que le procédé de segmentation a mis en oeuvre une opération d'ouverture morphologique sur une image où les objets sont clairs sur fond sombre, avec des sous-étapes d'érosion-dilatation.

Il est possible et il est équivalent de mener à bien un tel procédé de segmentation sur une image où les objets sont sombres sur fond clair, en mettant en oeuvre une opération de fermeture morphologique avec des sous-étapes de dilatation-érosion, et en utilisant le banc d'éléments structurants décrit plus haut. L'opération de soustraction du fond peut également être menée à bien comme décrit précédemment en considérant que les intensités sont inversées.

## DISPOSITIF

En référence avec la FIG.10, un dispositif de traitement d'images médicales, qui peut être associé avec un matériel de formation d'artériogramme du cerveau, ou qui peut être associé à divers matériels radiologiques, comprend :

un système 100 d'acquisition d'une image médicale numérisée, notamment un artériogramme, un système 200 de traitement d'image ayant accès aux données d'image numérique, incluant un microprocesseur pour mettre en oeuvre le procédé de segmentation décrit plus haut, et un système 201 d'affichage, relié à une sortie du microprocesseur, pour afficher les différentes images impliquées dans le procédé.

## Revendications

**1.** Procédé de traitement d'une image numérique représentant des objets en forme de rubans d'intensité non-uniforme contrastant sur un fond, ce procédé incluant une étape de segmentation automatique des dits objets en forme de ruban, comprenant une ou plusieurs opération(s) d'ouverture ou de fermeture morphologique, selon l'intensité du fond, menée(s) à bien avec respectivement un ou plusieurs élément(s) structurant(s) tridimensionnel(s) choisis parmi un élément structurant isotrope (G9) et des éléments structurants anisotropes orientés (G1-G8), définis dans deux premières dimensions dites spatiales (u, v) par un support spatial bidimensionnel respectivement isotrope ou anisotrope, parallèle au plan de l'image, et définis dans une troisième dimension (z) dite d'intensité, par une fonction non binaire d'intensité (G(u)) variable en fonction des deux dimensions spatiales.

2. Procédé selon la revendication 1, comprenant dans l'étape de segmentation:

une opération d'ouverture ou de fermeture morphologique menée à bien au moyen d'un élément structurant ayant un support bidimensionnel isotrope avec un centre de symétrie, et ayant une fonction d'intensité non-binaire avec un optimum (maximum ou minimum) au centre de symétrie, cette opération d'ouverture ou de fermeture morphologique étant effectuée en passant ledit élément structurant isotrope sur des points de l'image digitale le long de lignes et de colonnes, pour fournir une image d'ouverture dans laquelle sont détectés des objets substantiellement circulaires, et une opération de construction de l'image segmentée incluant les objets circulaires détectés et le fond.

3. Procédé selon la revendication 1, comprenant dans l'étape de segmentation :

une pluralité d'opérations d'ouverture ou de fermeture morphologique menées à bien respectivement au moyen des éléments d'un lot de N éléments structurants tridimensionnels, ayant des supports bidimensionnels anisotropes avec respectivement des axes principaux régulièrement angulairement espacés dans le plan de l'image de $\pi/N$ en $\pi/N$, et ayant respectivement des fonctions d'intensité non-binaires en troisième dimension, avec un optimum (maximum ou minimum) au centre de l'axe principal du support, cette opération d'ouverture ou de fermeture morphologique étant effectuée en passant lesdits éléments structurants anisotropes sur des points de l'image digitale le long de lignes de points parallèles aux dits axes principaux, pour fournir un lot de N images d'ouverture ou de fermeture dans lesquelles sont détectés respectivement des tronçons d'objets en forme de ruban ayant même orientation que lesdits axes principaux, et une opération de construction de l'image segmentée incluant lesdits tronçons détectés et le fond.

4. Procédé selon l'une des revendications 1 à 3, selon lequel, les fonctions d'intensité des éléments structurants sont des fonctions monomiales d'ordre supérieur à 1, ou des fonctions quadratiques, telles que :

$G(u) = a.u^n$ ou u est la variable selon un axe de traitement parallèle au plan de l'image, a est une constante, n est une constante supérieure à 1, placée en exposant de la variable.

5. Procédé selon l'une des revendications 1 à 4, selon lequel la ou les opérations d'ouverture ou fermeture morphologique est ou sont effectuée(s) à plusieurs différentes échelles en réglant les valeurs des constantes pour détecter au mieux des objets de différents diamètres dans l'image.

6. Procédé selon l'une des revendications 1 à 5, selon lequel l'opération d'ouverture comprend :

une première sous-étape d'érosion menée à bien sur un profil d'intensité I(x) de l'image digitale dans un plan défini par un axe des abscisses (x) parallèle a une direction d'un axe principal (D) d'un élément structurant ou un rayon (G) donne, et par un axe d'ordonnées (z), où sont portées les valeurs d'intensités, et au moyen de la fonction d'intensité [G(u)] de l'élément structurant présentant un maximum dans ce plan, cette première sous-étape d'érosion étant effectuée en chaque point d'abscisse donnée $(x_0)$ du profil d'intensité, par des glissements successifs de la fonction d'intensité [G(u)] au-dessous dudit profil d'intensité [1(x)] avec un point de tangence (T), et par la détermination du lieu géométrique du maximum de ladite fonction d'intensité [G(u)] comme l'érodé $[I_E(x)]$ du profil d'intensité [I(x)], procédé selon lequel l'opération d'ouverture comprend aussi : une deuxième sous-étape de dilatation, menée à bien sur ledit érodé $[I_E(x)]$ du profil d'intensité, au moyen de la fonction d'intensité inversée [-G(u)] de l'élément structurant présentant un minimum dans ledit plan, cette seconde sous-étape de dilatation étant effectuée en chaque point d'abscisse donnée $(x_0)$ du profil d'intensité érodé $[I_E(x)]$ par des glissements successifs de la fonction d'intensité inversée [-G(u)] au-dessus dudit profil d'intensité érodé $[I_E(x)]$ avec un point de tangence (T'), et par la détermination du lieu géométrique du minimum de ladite fonction d'intensité [-G(u)] comme le dilaté [I(x)] du profil d'intensité érodé

7. Procédé selon l'une des revendications 1 à 6, selon lequel une image appelée des intensités maximales est construite affectant à chaque pixel la valeur maximale parmi toutes les valeurs déterminées pour ce pixel par les opérations d'ouverture morphologique, et selon lequel ladite image des intensités maximales est seuillée pour fournir une image binaire.

8. Procédé selon l'une des revendications 1 à 7, selon lequel une image numérique ($J_0$) est préalablement acquise, représentant des objets en forme de rubans d'intensité non-uniforme contrastant sur un fond, image dans laquelle les objets sont de faible intensité sur un fond de plus forte intensité, ce procédé incluant avant l'étape de segmentation :

une sous-étape d'inversion des intensités, une sous-étape de lissage du bruit, résultant en une image appelée image lissée $J_{01}$. et ce procédé incluant aussi une étape d'extraction du fond pratiquée sur l'image lissée, comprenant : une sous-étape de passage sur les pixels de l'image lissée d'un lot de M filtres régulièrement angulairement orientés de n/M en $\pi$/M, qui chacun détermine une moyenne d'intensité de points situés de part et d'autre du pixel courant, à une distance ($R_1$, $R_2$) supérieure au rayon des vaisseaux dans ladite image lissée, et qui attribue cette moyenne au pixel courant, une sous-étape de formation d'une image du fond ou chaque pixel se voit attribuer la valeur d'intensité la plus basse parmi les intensités déterminées par les filtres du lot, une sous-étape de soustraction du fond dans l'image lissée pour fournir une image de travail ($J_0$).

9. Dispositif pour système médical, pour le traitement d'images médicales numériques représentant des objets en forme de rubans d'intensité non uniforme contrastant sur un fond, comprenant un système d'acquisition d'une image numérique, un système de traitement d'image ayant accès aux données de l'image comprend un microprocesseur pour mettre en oeuvre un procédé selon l'une des revendications 1 à 8.

**Patentansprüche**

1. Verfahren zur Verarbeitung eines Digitalbilds, das bandförmige Objekte mit uneinheitlicher Helligkeit darstellt, die zu einem Hintergrund kontrastieren, wobei dieses Verfahren einen Schritt der automatischen Segmentierung dieser bandförmigen Objekte einschließt, umfassend einen oder mehrere morphologische Öffnungs- oder Schließungsoperation(en), je nach Helligkeit des Hintergrunds, die jeweils mit einem oder mehreren dreidimensionalen Strukturelement(en) durchgeführt werden, die aus einem isotropen Strukturelement (G9) und anisotropen ausgerichteten Strukturelementen (G1-G8) gewählt werden, die in zwei ersten Dimensionen (u, v), räumliche Dimensionen genannt, durch ein zweidimensionales Raumelement, jeweils isotrop oder anisotrop, parallel zur Bildebene definiert werden, und die in einer dritten Dimension (z), Helligkeitsdimension genannt, von einer nichtbinären Helligkeitsfunktion (G(u)) definiert werden, die von den zwei räumlichen Dimensionen abhängig variabel ist.

2. Verfahren nach Anspruch 1, umfassend im Segmentierungsschritt:

eine morphologische Öffnungs- oder Schließungsoperation, die mit einem Strukturelement durchgeführt wird, das ein zweidimensionales isotropes Raumelement mit einem Symmetriezentrum aufweist, und eine nichtbinäre Helligkeitsfunktion mit einem Optimum (Maximum oder Minimum) im Symmetriezentrum, wobei diese morphologische Öffnungs- oder Schließungsoperation durchgeführt wird, indem dieses isotrope Strukturelement an Zeilen und Spalten entlang über die Punkte des Digitalbilds geführt wird, um ein Öffnungsbild zu ergeben, in dem im wesentlichen kreisrunde Objekte erkannt werden, und eine Aufbauoperation des segmentierten Bilds, das die erkannten kreisrunden Objekte und den Hintergrund enthält.

3. Verfahren nach Anspruch 1, umfassend im Segmentierungsschritt:

eine Vielzahl von morphologischen Öffnungs- oder Schließungsoperationen, die jeweils mit Elementen aus einem Satz aus N dreidimensionalen Strukturelementen durchgeführt werden, die zweidimensionale anisotrope Raumelemente aufweisen, jeweils mit Hauptachsen, deren Winkel in der Bildebene regelmäßig von $\pi$/N zu $\pi$/N beabstandet ist, und jeweils mit nichtbinären Helligkeitsfunktionen in der dritten Dimension mit einem Optimum (Maximum oder Minimum) im Zentrum der Hauptachse des Elements, wobei diese morphologische Öffnungs- oder Schließungsoperation durchgeführt wird, indem die anisotropen Strukturelemente auf den Punkten des Digitalbilds an Linien der Punkte entlang geführt wird, die zu diesen Hauptachsen parallel sind, um einen Satz aus N Öffnungs- oder Schließungsbildern zu ergeben, in welchen jeweils die bandförmigen Objektabschnitte erkannt werden, die die gleiche Ausrichtung wie die Hauptachsen haben, und eine Aufbauoperation des segmentierten Bilds, das diese erkannten Abschnitte und den Hintergrund enthält.

4.  Verfahren nach einem der Ansprüche 1 bis 3, wobei die Helligkeitsfunktionen der Strukturelemente monomiale Funktionen der Ordnung größer als 1 oder quadratische Funktionen sind, wie z.B.:

    $G(u) = a.u^n$, wobei u die Variable entlang einer Verarbeitungsachse parallel zur Bildebene ist, a eine Konstante ist, n eine Konstante größer als 1 ist, die als Exponent der Variablen eingesetzt wird.

5.  Verfahren nach einem der Ansprüche 1 bis 4, wobei die morphologischen Öffnungs- oder Schließungsoperation(en) in verschiedenen Maßstäben durchgeführt wird oder werden, indem die Werte der Konstanten so eingestellt werden, daß Objekte unterschiedlichen Durchmessers im Bild gut erkannt werden.

6.  Verfahren nach einem der Ansprüche 1 bis 5, wobei die Öffnungsoperation umfaßt:

    einen ersten Unterschritt der Erosion, der an einem Helligkeitsprofil I(x) des Digitalbilds in einer Ebene durchgeführt wird, die durch eine Abszissenachse (x) definiert wird, die parallel zu einer Richtung einer Hauptachse (D) eines Strukturelements oder einem gegebenen Radius (G) liegt, und durch eine Ordinatenachse (z), auf der die Helligkeitswerte übertragen sind, und mit Hilfe der Helligkeitsfunktion [G(u)] des Strukturelements, das ein Maximum in dieser Ebene aufweist, wobei dieser erste Unterschritt der Erosion an jedem gegebenen Abszissenpunkt ($x_o$) des Helligkeitsprofils durchgeführt wird, durch aufeinanderfolgende Verschiebungen der Helligkeitsfunktion [G(u)] unterhalb dieses Helligkeitsprofils [I(x)] mit einem Tangentenpunkt (T), und durch Bestimmung des geometrischen Orts des Maximums der Helligkeitsfunktion [G(u)] als das Erodierte [$I_E(x)$] des Helligkeitsprofils [I(x)], wobei der Öffnungsoperation nach diesem Verfahren auch umfaßt:

    einen zweiten Unterschritt der Dilatation, der am Erodierten [$I_E(x)$] des Helligkeitsprofils [I(x)] durchgeführt wird, mit Hilfe der invertierten Helligkeitsfunktion [-G(u)] des Strukturelements, das ein Minimum in dieser Ebene aufweist, wobei dieser zweite Unterschritt der Dilatation an jedem gegebenen Abszissenpunkt ($x_o$) des erodierten Helligkeitsprofils durchgeführt wird, durch aufeinanderfolgende Verschiebungen der invertierten Helligkeitsfunktion [-G(u)] oberhalb des erodierten Helligkeitsprofils [-

Is(x)] mit einem Tangentenpunkt (T'), und durch Bestimmung des geometrischen Orts des Minimums der Helligkeitsfunktion [G(u)] als das Dilatierte [1(x)] des erodierten Helligkeitsprofils.

7.  Verfahren nach einem der Ansprüche 1 bis 6, wobei ein aufgerufenes Bild der maximalen Helligkeiten aufgebaut wird, indem jedem Pixel das Maximum von allen Werten zugewiesen wird, die für dieses Pixel von den morphologischen Öffnungsoperationen bestimmt wurden, und wobei dieses Bild der maximalen Helligkeiten einem Schwellenwertvergleich unterzogen wird, um ein binäres Bild zu erhalten.

8.  Verfahren nach einem der Ansprüche 1 bis 7, wobei zuvor ein Digitalbild ($J_o$) erfaßt wird, das bandförmige Objekte mit uneinheitlicher Helligkeit darstellt, die zu einem Hintergrund kontrastieren, in diesem Bild die Objekte eine geringe Helligkeit vor einem Hintergrund mit höherer Helligkeit aufweisen, wobei dieses Verfahren vor dem Segmentierungsschritt umfaßt:

    einen Unterschritt des Inversion der Helligkeiten, einen Unterschritt der Glättung des Rauschens, der ein Bild ergibt, das geglättetes Bild $J_{01}$ genannt wird, und wobei dieses Verfahren auch einen Schritt der Hintergrundextraktion umfaßt, der am geglätteten Bild durchgeführt wird, umfassend:

    einen Unterschritt des Führens, auf den Pixeln des geglätteten Bilds, eines Satzes von M Filtern, die in Winkeln von $\pi/M$ zu $\pi/M$ regelmäßig ausgerichtet sind, jeweils ein Helligkeitsmittel der Punkte bestimmen, die beiderseits des aktuellen Pixels liegen, in einem Abstand ($R_1$, $R_2$), der größer ist als der Radius der Blutgefäße in diesem geglätteten Bild, und dem aktuellen Pixel dieses Mittel zuweisen, einen Unterschritt der Formung eines Hintergrundbilds, wobei jedem Pixel der niedrigste Helligkeitswert von den Helligkeiten zugewiesen wird, die von den Filtern des Satzes bestimmt wurden, einen Unterschritt der Subtraktion des Hintergrunds im geglätteten Bild, um ein Arbeitsbild ($J_0$) bereitzustellen.

9.  Vorrichtung für ein medizinisches System zur Verarbeitung von medizinischen Digitalbildern, die bandförmige Objekte mit uneinheitlicher Helligkeit darstellen, die zu einem Hintergrund kontrastieren, umfassend ein System zur Erfassung eines Digitalbilds, ein Bildverarbeitungssystem, das Zugriff auf die Bilddaten hat, umfassend einen Mikroprozessor, um ein Verfahren nach einem der Ansprüche 1 bis 8 auszuführen.

**Claims**

1. A method of processing a digital image representing ribbon-shaped objects of non-uniform intensity contrasting with a background of smaller intensity, which method includes an automatic segmentation phase comprising one or a plurality of morphological opening operations effected with one or several tri-dimensional structuring elements chosen from among an isotropic structuring element (G9) and oriented anisotropic structuring elements (G1 to G8) defined in two first dimensions, denoted spatial dimensions (u, v), by a bi-dimensional spatial support that is isotropic or anisotropic, as applicable, parallel to the plane of the image, and defined by a third dimension (z) which denotes the intensity by a non-binary intensity function (G(u)) which is variable as a function of the two spatial dimensions.

2. A method as claimed in Claim 1, comprising in the segmentation phase:

    a morphological opening or closing operation effected by means of a structuring element having an isotropic two-dimensional base with a center of symmetry, and having a non-binary intensity function with an optimum (maximum or minimum) in the center of symmetry, which morphological opening or closing operation is effected by passing said isotropic structuring element over points of the digital image along rows and columns so as to produce an opening image in which substantially circular objects are detected, and an operation for the construction of the segmented image including the detected circular objects and the background.

3. A method as claimed in Claim 1, comprising in the segmentation phase:

    a plurality of morphological opening or closing operations effected, respectively, by means of elements of a set ofN three-dimensional structuring elements having anisotropic two-dimensional bases with respective principal axes which are angularly equi-spaced in the image plane by π/N to π/N, and having respective non-binary intensity functions in a third dimension, with an optimum (maximum or minimum) in the center of the principal axis of the base,

    said morphological opening or closing operation being effected by passing said anisotropic structuring elements over points of the digital image along lines of points parallel to said principal axes so as to produce a set of N opening or closing images in which respective ribbon-shaped object sections are detected which have the same orientation as said principal axes, and an operation for the construction of the segmented image including said detected sections and the background.

4. A method as claimed in any one of the Claims 1 to 3, in which the intensity functions of the structuring elements are monomial functions of an order higher than I, or quadratic functions, such as:

$$G(u) = a.u^n$$

where u is the variable in accordance with a processing axis parallel to the plane of the image, a is a constant and n is a constant greater than 1 and is the exponent of the variable.

5. A method as claimed in Claim anyone of claims 1 to 4, in which the morphological opening or closing operation(s) is or are effected at a plurality of different scales by adjusting the values of the constants for the best possible detection of objects of different diameters in the image.

6. A method as claimed in any one of the Claims 1 to 5, in which the opening operation comprises:

    a first erosion sub-operation performed upon an intensity profile I(x) of the digital image in a plane defined by an axis of abscissae (x) parallel to a direction of a principal axis (D) of a structuring element or a given radius (G), and by an axis of ordinates (z) on which the intensity values are plotted, and by means of the intensity function [G(u)] of the structuring element which exhibits a maximum in this plane, said first erosion sub-operation being effected in each given abscissa point ($x_0$) of the intensity profile by successive shifts of the intensity function [G(u)] underneath said intensity profile I(x) with a tangent point (T) and by the determination of the geometrical locus of the maximum of said intensity function [G(u)] as the eroded form [$I_E(x)$] of the intensity profile [I(x)], in which method the opening operation also comprises:

    a second dilation sub-operation applied to said eroded intensity profile [$I_E(x)$] by means of the inverted intensity function [-G(u)] of the structuring element having a minimum in the said plane,

    said second dilation sub-operation being applied to each given abscissa point $(x_0)$ of the eroded intensity profile $[I_E(x)]$ by successive shifting of the inverted intensity function $[-G(u)]$ over said eroded intensity profile $[I_E(x)]$ with a tangent point (T'), and by the determination of the geometrical locus of the minimum of said intensity function $[-G(u)]$ as the dilated form $[I_D(x)]$ of the eroded intensity profile.

**7.** A method as claimed in any one of the Claims 1 to 6, in which an image denoted maximum intensity image is constructed by assigning to each pixel the maximum value of all the values determined for this pixel by means of the morphological opening operations, and in which said maximum intensity image is thresholded to produce a binary image.

**8.** A method as claimed in any one of the Claims 1 to 7, in which previously a digital image $(J_0)$ has been acquired, which represents ribbon-shaped objects of non-uniform intensity contrasting with a background, in which image the objects are low-intensity objects against a background of higher intensity, which method comprises prior to the segmentation phase:

an intensity inversion sub-operation, a noise smoothing sub-operation, yielding an image called smoothed image $J_{01}$,

and which method further includes a background extraction operation applied to the smoothed image, comprising a sub-operation of passing over the pixels of the smoothed image a set of M filters which are angularly equi-spaced by $\pi/M$ to $\pi/M$, which each determine an average intensity of points situated at opposite sides of the current pixel, at a distance $(R_1, R_2)$ greater than the radii of the vessels in said smoothed image, and which assigns said average to the current pixel, a sub-operation for the formation of a background image in which the lowest intensity value of the intensities determined by the filters of the set is assigned to each pixel, and a sub-operation for the subtraction of the background in the smoothed image to produce a working image $(J_0)$.

**9.** A device for a medical system, for the processing of digital medical images representing ribbon-shaped objects of non-uniform intensity contrasting with a background, the device comprising a system for the acquisition of a digital image and an image processing system having access to digital image data, which device further comprises a microprocessor for carrying out a method as claimed in any one of the Claims 1 to 8.

FIG. 1A

FIG.1B

$J_{00}$

$J_B$

EP 0 822 515 B1

FIG.2A

FIG.2B

FIG.2C

FIG.8

FIG.3

FIG.4 A

FIG.4 B

EP 0 822 515 B1

FIG.5A

FIG.5B

FIG.6A

FIG.6B

FIG.6C

FIG.10

FIG.7B

FIG.7A

$J_{00}$

FIG.7D

FIG.7C

$I(x,y)$

100

$J_{00}$

101

$J_{01}$

102

110

$J_{BG}$

103

$J_0$

111

130

$J_E$

112

$J_D$

121    129

$J_1$    $J_9$

113

**FIG.9**

$J_{MAX}$

114

$J_{ORI}$

115    140

$J_{SB}$

116

$J_B$